# FASCICULE DE BREVET EUROPEEN

(11) **EP 2 997 345 B1**
(45) Date de publication et mention de la délivrance du brevet: **06.09.2017**
(21) Numéro de dépôt: 14729402.9
(22) Date de dépôt: 09.05.2014
(51) Int. Cl.: G01N 3/04, G01N 3/32, G01M 5/00, G01M 7/00

(54) **BANC D'ESSAI EN FATIGUE OLIGOCYCLIQUE OU EN FATIGUE OLIGOCYCLIQUE ET POLYCYCLIQUE**
PRÜFSTAND FÜR OLIGOCYCLISCHE ERMÜDUNG ODER OLIGOCYCLISCHE UND POLYCYCLISCHE ERMÜDUNG
OLIGOCYCLIC FATIGUE OR OLIGOCYCLIC AND POLYCYCLIC FATIGUE TEST RIG

(30) Priorité: 17.05.2013 FR 1354435
(43) Date de publication de la demande: 23.03.2016
(73) Titulaire: Safran Aircraft Engines, 75015 Paris (FR); Safran Helicopter Engines, 64510 Bordes (FR)
(72) Inventeur: MERIAUX, Jean, Vincent, Manuel, F-77550 Moissy-Cramayel Cedex (FR); PUECH,Guillaume, F-77550 Moissy-cramayel Cedex (FR); RUIZ-SABARIEGO, Juan-Antonio, F-77550 Moissy-cramayel Cedex (FR); SERRES, Nathalie, F-77550 Moissy-cramayel Cedex (FR); HOUZE, Laurent, F-64420 Andoins (FR)
(74) Mandataire: Gevers & Orès
(86) Numéro de dépôt international: PCT/FR2014/051072
(87) Numéro de publication internationale: WO 2014/184468

(56) Documents cités:
- FR-A1- 2 963 425
- GB-A- 228 625
- US-A- 2 419 711
- US-A- 5 606 168
- US-A- 6 033 185
- US-A1- 2002 017 144
- US-A1- 2010 263 453
- US-A1- 2011 000 308
- US-B1- 6 250 166

## Description

### DOMAINE TECHNIQUE

La présente invention concerne un banc d'essai en fatigue oligocyclique, et éventuellement combinée oligocyclique et polycyclique, pour reproduire un appui de pièces de turbomachine, tel qu'un appui d'au moins un pied d'aube sur une portée d'alvéole d'un disque de rotor.

### ETAT DE L'ART

Un disque de rotor de turbomachine comprend à sa périphérie une rangée annulaire d'alvéoles dans lesquelles sont emmanchés des pieds d'aube, qui sont par exemple du type queue d'aronde, pour former une roue de rotor. En fonctionnement, les aubes sont soumises à des forces centrifuges et leurs pieds viennent en appui sur des portées latérales des alvéoles du disque. Les aubes sont en outre soumises à des oscillations liées aux efforts aérodynamiques qui induisent des glissements relatifs entre les pieds d'aube et le disque. Ces sollicitations influent sur la durée de vie des attaches aube-disque.

L'analyse de la durée de vie des attaches aube-disque repose sur des calculs rendus complexes par l'influence du contact sur les contraintes et durées de vie calculées. Le calcul de prédiction des durées de vie est possible via un modèle numérique complet. La difficulté du modèle mis en place réside dans les données d'entrée nécessaires. En effet, le modèle requiert une corrélation entre un champ de contraintes vu sous le contact aube-disque et le nombre de cycles à amorçage d'une fissure correspondante.

En vue de cette analyse, il est nécessaire de concevoir un essai capable de reproduire, en condition de laboratoire, un contact aube-disque soumis à un chargement de fatigue oligocyclique (LCF : *low cycle fatigue*) ou combiné oligocyclique et polycyclique (HCF : high cycle fatigue). Un banc d'essai doit permettre de déterminer expérimentalement la durée de vie du contact aube-disque. Ces données expérimentales seront utilisées par la suite pour caler les méthodologies numériques de détermination de durée de vie sur les pièces réelles sur lesquelles il est impossible de déterminer expérimentalement une durée de vie.

Dans la technique actuelle, les bancs d'essai en fatigue oligocyclique comprennent chacun un organe de support fixé à un bâti et définissant au moins une surface d'appui, et une éprouvette qui est reliée à des moyens de traction pour solliciter l'éprouvette en appui sur la ou chaque surface d'appui de l'organe. Les documents US2010/0263453, US6250166 et US2011/0000308 montrent des exemples de banc d'essais pour pièces de turbomachine. En particulier, US2010/0263453 décrit un banc d'essai en fatigue oligocyclique, et éventuellement polycyclique, pour reproduire un appui de pièces de turbomachine, tel qu'un appui d'au moins un pied d'aube sur une portée d'alvéole d'un disque de rotor, ce banc d'essai comprenant un organe de support fixé à un bâti et définissant au moins une surface d'appui, et une éprouvette qui est reliée à des moyens de traction pour solliciter l'éprouvette en appui sur la ou chaque surface d'appui de l'organe, la ou chaque surface d'appui est portée par un élément, en ce que l'éprouvette est reliée aux moyens de traction par des moyens d'articulation autour d'un axe (A). Cependant, ces bancs d'essai ne sont pas entièrement satisfaisants en particulier car l'homogénéité du contact entre les pièces n'est pas garantie au démarrage de l'essai et pendant toute la durée de l'essai, ce qui peut fausser les calculs d'évaluation de la durée de vie. De plus, l'organe de support et l'éprouvette sont relativement encombrants dans ces bancs d'essai. Par ailleurs, il peut être difficile d'équiper ces bancs d'essai en instruments de mesure et de contrôle et d'avoir facilement accès à ces instruments. Enfin, ces bancs d'essai ne permettent pas toujours une bonne représentativité vis-à-vis de l'application industrielle des pièces.

La présente invention a notamment pour but d'apporter une solution simple, efficace et économique à au moins une partie des problèmes précités.

### EXPOSE DE L'INVENTION

L'invention propose un banc d'essai en fatigue oligocyclique, et éventuellement combinée oligocyclique et polycyclique, pour reproduire un appui de pièces de turbomachine, tel qu'un appui d'au moins un pied d'aube sur une portée d'alvéole d'un disque de rotor, ce banc d'essai comprenant un organe de support fixé à un bâti et définissant au moins une surface d'appui, et une éprouvette qui est reliée à des moyens de traction pour solliciter l'éprouvette en appui sur la ou chaque surface d'appui de l'organe, caractérisé en ce que la ou chaque surface d'appui est portée par un élément qui est monté rotatif autour d'un premier axe sur l'organe de support, et en ce que l'éprouvette est reliée aux moyens de traction par des moyens d'articulation autour d'un second axe sensiblement perpendiculaire au premier axe, et en ce qu'il comprend en outre des moyens de réglage et de blocage de l'élément et de l'éprouvette dans des positions autour des axes précités.

Selon l'invention, l'élément a un degré de liberté par rapport à l'organe de support et l'éprouvette a un degré de liberté par rapport aux moyens de traction. Ce double degré de liberté est particulièrement avantageux car les positions relatives de l'éprouvette et de l'élément porté par l'organe de support peuvent être ajustées avec précision de façon à assurer que l'éprouvette soit bien en appui sur la ou chaque surface d'appui de l'organe de support. Une fois que l'éprouvette et l'élément sont correctement positionnés, ils sont bloqués dans ces positions pour qu'ils les conservent au démarrage de l'essai. L'invention garantit donc un contact parfaitement homogène au début de l'essai.

Le banc d'essai selon l'invention peut être adapté à la technologie connue car le bâti et les moyens de traction peuvent être ceux utilisés dans la technique antérieure.

L'élément comprend de préférence une surface extérieure sensiblement cylindrique coopérant avec une surface sensiblement complémentaire de l'organe de support pour guider l'élément en rotation autour du premier axe.

Les moyens de blocage de l'élément et/ou de l'éprouvette sont par exemple du type à vis.

Les moyens de blocage de l'élément peuvent comprendre au moins une vis qui est vissée dans un orifice taraudé de l'élément et qui traverse une lumière de l'organe de support, la tête de la vis étant destinée, au serrage de la vis, à prendre appui sur l'organe de support pour immobiliser l'élément, et la lumière ayant une forme sensiblement allongée pour autoriser un débattement angulaire de l'élément autour du premier axe lorsque la vis est engagée dans l'orifice de l'élément mais n'est pas serrée.

Avantageusement, l'élément est porté par une partie médiane de l'organe qui est reliée par au moins un premier bras à un socle fixé au bâti, ce premier bras étant incliné de façon à ce qu'il soit orienté sensiblement parallèlement à une surface d'appui de l'élément. Ainsi, le premier bras est sensiblement colinéaire ou tangent aux efforts de cisaillement appliqués sur la surface d'appui définie par l'élément. Ceci permet de limiter les risques de déformation de l'organe support lors d'un essai.

La partie médiane peut être reliée par au moins un second bras à une barre transversale sensiblement parallèle au socle, ce second bras étant incliné de façon à ce qu'il soit sensiblement parallèle à une normale à la surface d'appui définie par l'élément. Le second bras est alors sensiblement parallèle aux efforts normaux appliqués sur la surface d'appui de l'élément. Ceci permet également de limiter les risques de déformation de l'organe support lors d'un essai, et réduit considérablement le risque de désalignement du contact des pièces. L'invention permet ainsi de maintenir le contact des pièces pendant toute la durée de l'essai.

L'organe de support peut comprendre deux éléments montés rotatifs sur deux parties médianes de l'organe, respectivement, et autour de premiers axes parallèles et à distance l'un de l'autre, ces éléments comportant des surfaces d'appui destinées à reproduire des portions de deux pieds d'aube adjacents d'une roue de rotor. Autrement dit, le banc d'essai permet de reproduire deux contacts aube-disque.

Dans un mode de réalisation de l'invention, les parties médianes de l'organe sont chacune reliées à deux barres transversales parallèles par deux second bras, respectivement, les barres transversales, les premiers et seconds bras, les parties médianes et le socle de l'organe étant formés d'une seule pièce, et l'éprouvette passant entre les barres transversales en position de montage.

Lors d'un essai en fatigue polycyclique, l'organe de support peut être relié au bâti par une pièce en forme de I à partie médiane flexible, et l'éprouvette peut être reliée à une extrémité d'une lame vibrante dont l'autre extrémité est reliée aux moyens de traction par une autre pièce en forme de I à partie médiane flexible, de sorte que l'éprouvette et l'organe de support soient en appui dans une zone située au niveau d'un noeud d'un premier mode de vibration du banc.

Cette position de la zone d'appui permet d'assurer un glissement maximal des pièces au niveau du contact tout en limitant les déplacements de l'ensemble. Ceci permet d'équiper le banc d'essai de plusieurs instruments et en particulier d'une caméra de visualisation de la zone d'appui.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue très schématique de l'attache d'un pied d'aube dans une alvéole d'un disque de rotor d'une turbomachine,
- la figure 2 est une vue schématique partielle en perspective d'un banc d'essai en fatigue oligocyclique selon l'invention et montre l'éprouvette et l'organe de support de ce banc,
- la figure 3 et une demi-vue de l'organe de support et de l'éprouvette de la figure 2,
- la figure 4 est une vue schématique en perspective d'un des éléments portés par l'organe de support de la figure 2,
- la figure 5 est une vue schématique en perspective de l'éprouvette de la figure 2,
- la figure 6 est une vue très schématique de la zone d'appui entre l'éprouvette et l'un des éléments de l'organe de support de la figure 2,
- la figure 7 est une vue très schématique d'une partie de l'organe de support et montre des bras inclinés de cet organe,
- la figure 8 est une vue schématique en perspective d'un banc d'essai en fatigue oligocyclique et polycyclique selon l'invention, et
- la figure 9 est un schéma représentant la position de la zone d'appui entre l'éprouvette et l'organe de support, par rapport à un premier mode de vibration du banc.

### DESCRIPTION DETAILLEE

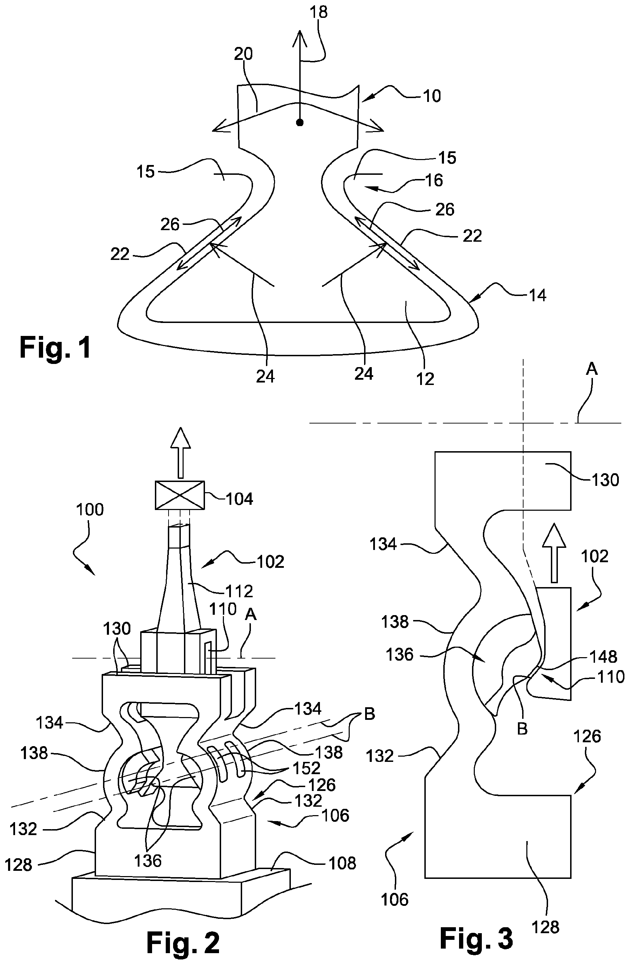

On se réfère d'abord à la figure 1 qui représente de manière schématique une attache aube-disque d'une turbomachine, l'aube 10 comportant un pied 12 qui est engagé dans une alvéole 14 de la périphérie d'un disque de rotor 16, ce disque comportant une rangée annulaire d'alvéoles 14 de ce type de réception des pieds d'aubes. L'ensemble formé par le disque 16 et les aubes 10 forment une roue de rotor de la turbomachine. Le pied 12 est ici en queue d'aronde. Deux alvéoles 14 adjacentes du disque 16 sont séparées l'un de l'autre par une dent 15, les dents 15 situées de part et d'autre du pied 12 de l'aube de la figure 1 étant partiellement représentées.

En fonctionnement, l'aube 10 est soumise à des forces centrifuges (flèche 18) et sa pale a tendance à osciller (flèche 20), ce qui provoque l'appui et le glissement des parties latérales du pied d'aube 12 sur des portées 22 latérales de l'alvéole 14 du disque. Les flèches 24 représentent des efforts normaux qui s'appliquent sur les surfaces en regard du pied d'aube 12 et de l'alvéole 14, et les flèches 26 désignent des efforts de cisaillement qui s'appliquent sur ces surfaces.

Les figures 2 à 7 représentent un mode de réalisation du banc d'essai selon l'invention, qui est conçu pour reproduire deux contacts aube-disque soumis à un chargement de fatigue oligocyclique (LCF : *Low Cycle Fatigue*) et combiné oligocyclique et polycyclique (HCF : High Cycle Fatigue), afin de déterminer expérimentalement la durée de vie de ces contacts.

Le banc d'essai 100 comprend essentiellement deux parties, une première partie 102 qui est reliée à des moyens de traction 104 et qui est destinée à reproduire une dent d'un disque de rotor, et une deuxième partie 106 qui est reliée à un bâti 108 fixe et qui est destinée à reproduire des portions de deux pieds d'aube coopérant avec cette dent.

La première partie 102 comprend une éprouvette 110 qui est montée à l'extrémité d'une lame 112 dont l'autre extrémité est reliée aux moyens de traction 104. Ces moyens de traction 104 comprennent par exemple un vérin dont l'extrémité libre de la tige est reliée à la lame 112 et dont le cylindre est porté par une partie fixe du banc d'essai. Ce vérin est de préférence orienté parallèlement à la lame 112 de façon à ce que la force de traction soit parallèle à l'axe longitudinal de la lame 112.

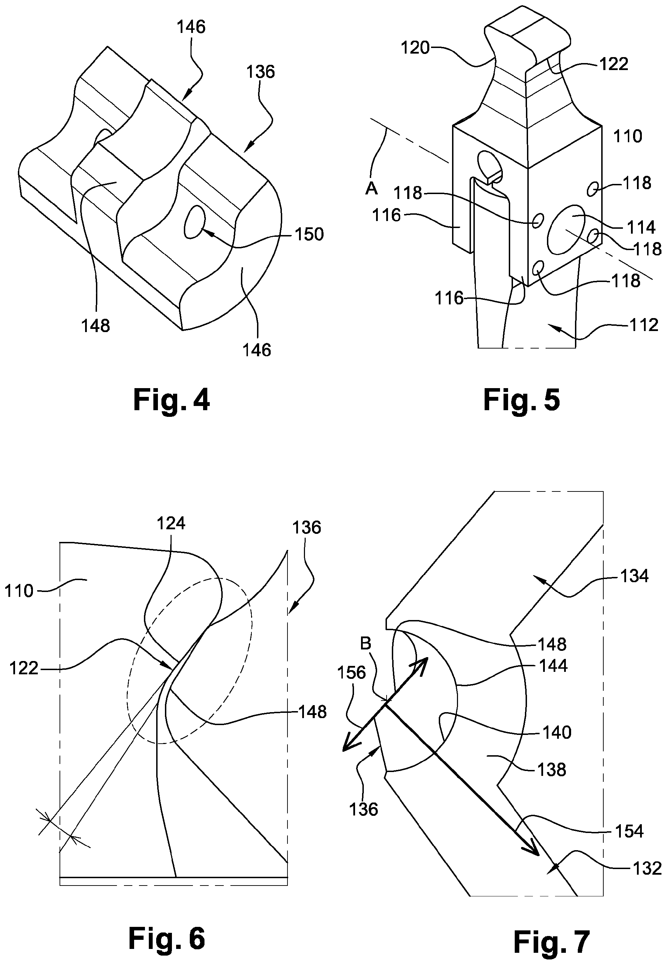

L'éprouvette 110 est articulée sur un axe 114 porté par l'extrémité de la lame 112 de façon à pouvoir déplacer l'éprouvette en rotation autour d'un axe A qui est sensiblement perpendiculaire à l'axe longitudinal de la lame 112 et qui est parallèle au plan du dessin de la figure 3. Dans l'exemple représenté en figure 5, l'éprouvette 110 comprend une base en U comportant deux pattes 116 parallèles et à distance l'une de l'autre, une extrémité plate de la lame 112 étant intercalée entre ces pattes et portant l'axe 114 dont les extrémités sont logées et coulissent en rotation dans des orifices des pattes 116. L'éprouvette 110 est mobile en rotation autour de l'axe A sur une plage angulaire de quelques dizaines de degrés environ.

Au moins une des pattes 116 de l'éprouvette 110 comprend des orifices 118 taraudés et traversants de montage de vis (non représentées) de blocage en rotation de l'éprouvette 110. Ces vis sont destinées à prendre appui par leurs extrémités libres sur l'extrémité de la lame 112 et à immobiliser l'éprouvette 110 dans une position déterminée autour de l'axe A.

L'éprouvette 110 comprend en outre une partie conformée en dent de disque et reliée à la base précitée, cette partie reproduisant des portions de deux alvéoles adjacentes du disque. Cette partie a une forme générale en queue d'aronde et comprend deux faces latérales conformées pour reproduire les portées 120, 122 de deux alvéoles adjacentes du disque. Chacune de ces portées 120, 122 comprend une surface d'appui 124 relativement plane (figure 6).

La deuxième partie 106 du banc d'essai 100 comprend un organe de support 126 comportant un socle 128 fixé au bâti 108 et deux barres transversales 130 parallèles entre elles et au socle et à distance l'une de l'autre, ces barres 130 étant reliées au socle par des bras 132, 134 qui portent des éléments 136 d'appui de l'éprouvette 110.

Le socle 128 a une forme parallélépipédique et est de préférence fixé à plat dans une position horizontale sur le bâti 108. Il est relié par deux extrémités opposées à des extrémités inférieures de premiers bras 132 dont les extrémités supérieures sont reliées à des parties médianes 138 de support des éléments d'appui 136, ces parties médianes 138 étant reliées aux extrémités inférieures de seconds bras 134 dont les extrémités supérieures sont reliées aux extrémités des barres transversales 130.

Dans l'exemple représenté, chaque partie médiane 138 est en portion de cylindre et comprend une portion de surface cylindrique interne 140 orientée vers l'intérieur de l'organe 126 et une portion de surface cylindrique externe 142 orientée vers l'extérieur de l'organe.

Les premiers bras 132 ou bras inférieurs sont au nombre de deux, chaque bras 132 reliant une extrémité du socle 128 à une extrémité inférieure de la partie médiane 138. Comme cela sera expliqué plus en détail dans ce qui suit, ces bras 132 sont inclinés, notamment par rapport au socle 128.

Les seconds bras 134 ou bras supérieurs sont au nombre de quatre, chaque partie médiane 138 étant reliée par une paire de seconds bras 134 à des premières extrémités des barres transversales 130 dont les extrémités opposées sont reliées par l'autre paire de seconds bras 134 à l'autre partie médiane 138. Les seconds bras 134 de chaque paire sont parallèles et à distance l'un de l'autre, chaque barre transversale 130 et les seconds bras 134 reliés à cette barre étant situés sensiblement dans un même plan. Ces bras 134 sont inclinés par rapport au socle 128 et aux barres 130.

Les éléments 136 sont montés mobiles en rotation sur les surfaces cylindriques internes 140 des parties médianes 138 autour d'axes B parallèles, respectivement, ces axes B étant sensiblement perpendiculaires à l'axe A, c'est-à-dire sensiblement perpendiculaire au plan du dessin de la figure 3.

Chaque élément 136, mieux visible en figure 4, comprend une surface extérieure 144 sensiblement cylindrique et complémentaire de la surface intérieure 140 précitée de la partie médiane 138 correspondante, de façon à ce que l'élément 136 puisse coulisser en rotation autour de l'axe B par rapport à l'organe. Chaque élément 136 comprend en outre un patin d'appui 146 comportant une surface plane 148 d'appui sur l'une des surfaces 124 précitées de l'éprouvette 110. La position de chaque élément 136 autour de l'axe B correspondant peut être réglée et bloquée au moyen de vis (non représentées), qui sont vissées dans des orifices 150 taraudés de l'élément. Ces vis sont destinées à traverser des lumières 152 des parties médianes 138 de l'organe, qui ont une forme allongée dont l'axe d'allongement est sensiblement perpendiculaire aux axes B. Les vis sont engagées depuis l'extérieur de l'organe dans les lumières et les orifices taraudés des éléments, les têtes des vis étant destinées à prendre appui sur les surfaces extérieures 142 des parties médianes 138 pour retenir les éléments 136.

En position de montage représentée aux figures 2 et 3, l'éprouvette 110 s'étend entre les barres transversales 130 de l'organe 126 de sorte que la lame 112 s'étende dans une direction opposée au socle. Les surfaces 124 de l'éprouvette 110 sont destinées à venir en appui sur les surfaces 148 des éléments 136.

Comme cela est visible en figure 6, au montage, ces surfaces 124, 148 peuvent être séparées l'une de l'autre par un faible jeu et peuvent être légèrement inclinées l'une par rapport à l'autre si bien qu'elles peuvent ne pas venir en parfait contact l'une contre l'autre.

Cet inconvénient est supprimé grâce aux deux degrés de liberté autour des axes A et B de l'éprouvette 110 et des éléments 136, respectivement, qui permettent de régler avec précision les positions relatives de l'éprouvette et des éléments et de s'assurer que les surfaces d'appui 124, 148 soient bien en contact l'une avec l'autre au démarrage d'un essai. Une fois que ces positions ont été réglées, elles sont bloquées au moyen des vis précitées.

Comme cela est visible en figure 7, chaque premier bras 132 est sensiblement parallèle aux efforts normaux (flèche 154) appliqués sur la surface 148 de l'élément 136 correspondant, et chaque second bras 134 est sensiblement parallèle aux efforts de cisaillement (flèches 156) appliqués sur ces surfaces. Ceci permet de limiter les déformations de l'organe en utilisation et assure le maintien du contact entre les éléments et l'éprouvette pendant toute la durée d'un essai.

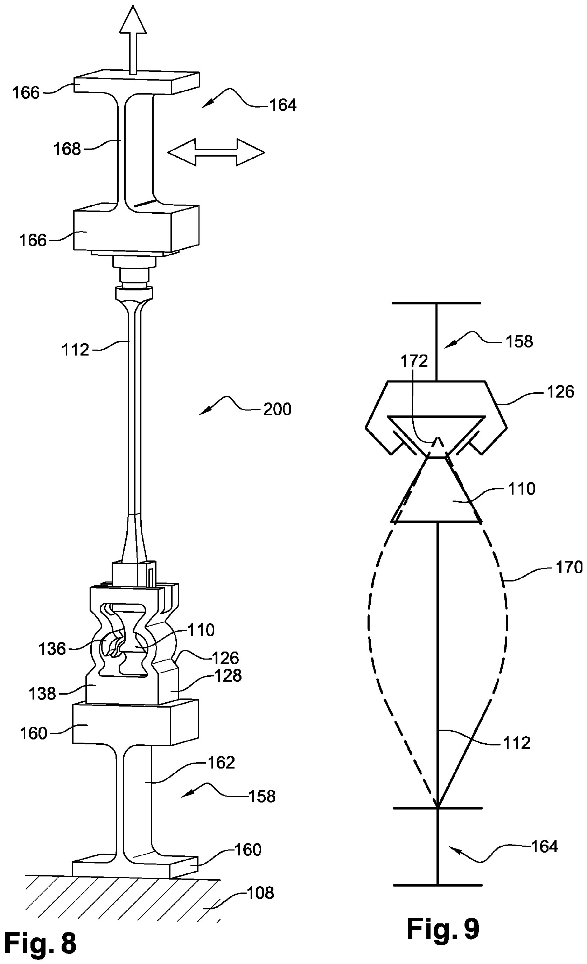

La figure 8 représente une variante de réalisation du banc d'essai 200 selon l'invention qui est ici conçu pour reproduire deux contacts aube-disque soumis à un chargement de fatigue oligocyclique (LCF : *Low Cycle Fatigue*) et polycyclique (HCF : *High Cycle Fatigue*)*.*

Le banc d'essai 200 comprend toutes les caractéristiques précitées du banc 100, avec en plus les caractéristiques suivantes.

L'organe 126 est fixé au bâti par l'intermédiaire d'une pièce 158 en forme de I. Cette pièce 158 comporte deux blocs 160 massifs sensiblement parallélépipédiques et parallèles qui sont reliés entre eux par une paroi 162 flexible perpendiculaire aux blocs. Le socle 128 de l'organe 126 est appliqué et fixé sur un des blocs 160, le second bloc étant fixé au bâti 108.

La lame 112 est fixée aux moyens de traction par l'intermédiaire d'une autre pièce 164 en forme de I, sensiblement identique à la première 160. L'un des blocs 166 de cette pièce 164 est fixé à une extrémité de la lame 112 (opposée à l'éprouvette 110) et l'autre bloc 166 est relié aux moyens de traction. Les parois 162, 168 flexibles des pièces en I sont sensiblement coplanaires.

Le banc d'essai 200 comprend des moyens d'excitation, tels qu'un pot vibrant, qui prennent appui sur la pièce 164 en I reliée à la lame 112, par exemple au niveau du bloc 166 relié à cette lame, pour faire vibrer la lame 112

La figure 9 représente de manière schématique le banc d'essai 200 ainsi qu'un premier mode 170 de vibration du banc. Avantageusement, comme cela est représenté dans cette figure, les surfaces d'appui de l'éprouvette 110 et des éléments 136 portés par l'organe 126 sont situées au niveau d'un noeud de vibration 172 de ce premier mode, de façon à exciter la lame 112 avec une forte amplitude, et à maximiser les mouvements relatifs (glissements) entre l'éprouvette et l'organe tout en limitant les déplacements de l'ensemble formé par l'éprouvette 110 et l'organe 126.

## Revendications

1. Banc d'essai (100) en fatigue oligocyclique, et éventuellement polycyclique, pour reproduire un appui de pièces de turbomachine, tel qu'un appui d'au moins un pied d'aube sur une portée d'alvéole d'un disque de rotor, ce banc d'essai comprenant un organe de support (126) fixé à un bâti (108) et définissant au moins une surface d'appui (148), et une éprouvette (110) qui est reliée à des moyens de traction (104) pour solliciter l'éprouvette en appui sur la ou chaque surface d'appui de l'organe, la ou chaque surface d'appui (148) est portée par un élément (136) qui est monté rotatif autour d'un premier axe (B) sur l'organe de support, et l'éprouvette est reliée aux moyens de traction par des moyens (114) d'articulation autour d'un second axe (A) sensiblement perpendiculaire au premier axe, et qu'il comprend en outre des moyens de réglage et de blocage de l'élément et de l'éprouvette dans des positions autour des axes précités.

2. Banc d'essai (100) selon la revendication 1, **caractérisé en ce que** l'élément (136) comprend une surface extérieure (144) sensiblement cylindrique coopérant avec une surface (140) sensiblement complémentaire de l'organe de support (126) pour guider l'élément en rotation autour du premier axe (B).

3. Banc d'essai (100) selon la revendication 1 ou 2, **caractérisé en ce que** les moyens de blocage de l'élément (136) et/ou de l'éprouvette (110) sont du type à vis.

4. Banc d'essai (100) selon la revendication 3, **caractérisé en ce que** les moyens de blocage de l'élément (136) comprennent au moins une vis qui est vissée dans un orifice (150) taraudé de l'élément et qui traverse une lumière (152) de l'organe de support (126), la tête de la vis étant destinée, au serrage de la vis, à prendre appui sur l'organe de support pour immobiliser l'élément, et la lumière ayant une forme sensiblement allongée pour autoriser un débattement angulaire de l'élément autour du premier axe (B) lorsque la vis est engagée dans l'orifice de l'élément mais n'est pas serrée.

5. Banc d'essai (100) selon l'une des revendications précédentes, **caractérisé en ce que** l'élément (136) est porté par une partie médiane (138) de l'organe (126) qui est reliée par au moins un premier bras (132) à un socle (128) fixé au bâti (108), ce premier bras étant incliné de façon à ce qu'il soit orienté sensiblement perpendiculairement à la surface d'appui (148) définie par l'élément.

6. Banc d'essai (100) selon la revendication 5, **caractérisé en ce que** la partie médiane (138) est reliée par au moins un second bras (134) à une barre (130) transversale sensiblement parallèle au socle (128), ce second bras étant incliné de façon à ce qu'il soit sensiblement parallèle à la surface d'appui (148) définie par l'élément.

7. Banc d'essai (100) selon la revendication 5 ou 6, **caractérisé en ce que** l'organe de support (126) comprend deux éléments (136) montés rotatifs sur deux parties médianes (138) de l'organe, respectivement, et autour de premiers axes (B) parallèles et à distance l'un de l'autre, ces éléments comportant des surfaces d'appui (148) destinées à reproduire des portions de deux pieds d'aube adjacents d'une roue de rotor.

8. Banc d'essai (100) selon la revendication 7, **caractérisé en ce que** les parties médianes (138) de l'organe (126) sont chacune reliées à deux barres (130) transversales parallèles par deux second bras (134), respectivement, les barres transversales, les premiers et seconds bras (132, 134), les parties médianes et le socle (128) de l'organe étant formés d'une seule pièce, et l'éprouvette (110) passant entre les barres transversales en position de montage.

9. Banc d'essai (200) selon l'une des revendications précédentes, **caractérisé en ce que** l'organe de support (126) est relié au bâti (108) par une pièce (158) en forme de I à partie médiane flexible, et l'éprouvette (110) est reliée à une extrémité d'une lame (112) vibrante dont l'autre extrémité est reliée aux moyens de traction (104) par une autre pièce (164) en forme de I à partie médiane flexible, de sorte que l'éprouvette et l'organe de support soient en appui dans une zone située au niveau d'un noeud de vibration (172) d'un premier mode de vibration (170) lors d'un essai en fatigue polycyclique.

## Patentansprüche

1. Prüfstand (100) für die Ermüdung bei geringer Lastspielzahl und gegebenenfalls hoher Lastspielzahl, um eine Auflage von Teilen der Strömungsmaschine, wie beispielsweise eine Auflage von mindestens einem Schaufelfuß auf einem Alveolenbereich einer Rotorscheibe, zu reproduzieren, wobei dieser Prüfstand eine Einrichtung zum Stützen (126), die an einem Gestell (108) befestigt ist und zumindest eine Auflagefläche (148) definiert, und einen Prüfling (110) umfasst, der mit Zugmitteln (104) verbunden ist, um den Prüfling, der auf der oder jeder Auflageoberfläche der Einrichtung aufliegt, vorzuspannen, wobei die oder jede Auflagefläche (148) von einem Element (136) getragen wird, das drehbar um eine erste Achse (B) auf der Einrichtung zum Stützen angebracht ist, und wobei der Prüfling mit den Zugmitteln über Gelenkmittel (114) um eine zweite Achse (A) verbunden ist, die im Wesentlichen senkrecht zu der ersten Achse ist, und der ferner Mittel zum Einstellen und Arretieren des Elements und des Prüflings in Positionen um die vorgenannten Achsen umfasst.

2. Prüfstand (100) nach Anspruch 1, **dadurch gekennzeichnet, dass** das Element (136) eine im Wesentlichen zylindrische Außenfläche (144) aufweist, die mit einer im Wesentlichen komplementären Oberfläche (140) der Einrichtung zum Stützen (126) zusammenwirkt, um das Element drehbar um die erste Achse (B) zu führen.

3. Prüfstand (100) nach Anspruch 1 oder 2, **dadurch gekennzeichnet, dass** die Mittel zum Arretieren des Elements (136) und/oder des Prüflings (110) vom Typ Schrauben sind.

4. Prüfstand (100) nach Anspruch 3, **dadurch gekennzeichnet, dass** die Mittel zum Arretieren des Elements (136) mindestens eine Schraube umfassen, die in eine Gewindeöffnung (150) des Elements eingeschraubt ist und die eine Öffnung (152) der Einrichtung zum Stützen (126) durchläuft, wobei der Kopf der Schraube dazu bestimmt ist, beim Anziehen der Schraube auf der Einrichtung zum Stützen aufzuliegen, um das Element zu immobilisieren, und wobei die Öffnung eine im Wesentlichen längliche Form hat, um einen Winkelausschlag des Elements um die erste Achse (B) zu ermöglichen, wenn die Schraube in die Öffnung des Elements eingreift, jedoch nicht festgezogen ist.

5. Prüfstand (100) nach einem der vorhergehenden Ansprüche, **dadurch gekennzeichnet, dass** das Element (136) von einem mittleren Abschnitt (138) des Elements (126) getragen wird, der über mindestens einen ersten Arm (132) mit einem Sockel (128) verbunden ist, der an dem Gestell (108) befestigt ist, wobei der erste Arm so geneigt ist, dass er im Wesentlichen senkrecht zu der Auflagefläche (148) ausgerichtet ist, die durch das Element definiert ist.

6. Prüfstand (100) nach Anspruch 5, **dadurch gekennzeichnet, dass** der mittlere Abschnitt (138) durch mindestens einen zweiten Arm (134) mit einer transversalen Stange (130) verbunden ist, die im Wesentlichen parallel zu dem Sockel (128) ist, wobei der zweite Arm geneigt ist, so dass er im Wesentlichen parallel zu der Auflagefläche (148) ist, die durch das Element definiert ist.

7. Prüfstand (100) nach Anspruch 5 oder 6, **dadurch gekennzeichnet, dass** das Stützelement (126) zwei Elemente (136) umfasst, die jeweils drehbar an zwei mittleren Abschnitten (138) des Elements und um erste Achsen (B), die parallel und in einem Abstand voneinander sind, befestigt sind, wobei diese Elemente Auflageflächen (148) umfassen, die dazu bestimmt sind, Abschnitte von zwei benachbarten Schaufelfüssen eines Rotorrad zu reproduzieren.

8. Prüfstand (100) nach Anspruch 7, **dadurch gekennzeichnet, dass** die mittleren Abschnitte (138) der Einrichtung (126) jeweils mit zwei transversalen parallelen Stangen (130) über zwei zweite Arme (134) verbunden sind, wobei die transversalen Stangen, die ersten und zweiten Arme (132, 134), die mittleren Abschnitte und der Sockel (128) der Einrichtung aus einem einzigen Stück ausgebildet sind, und wobei der Prüfling (110) zwischen den transversalen Stangen in der Montageposition verläuft.

9. Prüfstand (200) nach einem der vorhergehenden Ansprüche, **dadurch gekennzeichnet, dass** das Stützelement (126) mit dem Gestell (108) über ein I-förmiges Teil (158) mit einem flexiblen mittleren Abschnitt verbunden ist, und dass der Prüfling (110) mit einem Ende einer vibrierenden Schneide (112) verbunden ist, deren anderes Ende mittels Zugmittel (104) mit einem anderen I-förmigen Teil (164) mit einem flexiblen mittleren Abschnitt verbunden ist, so dass der Prüfling und das Tragelement in einem Bereich aneinander anliegen, der sich an einem Schwingungsknoten (172) eines ersten Schwingungsmodus (170) während eines Ermüdungstests mit hoher Lastspielzahl befindet.

## Claims

1. Low-cycle, and optionally high-cycle, fatigue test rig (100), for reproducing bearing of turbine engine parts, such as at least one blade root bearing against a recess contact surface of a rotor disc, said test rig comprising a support member (126) which is fixed to a frame (108) and defines at least one bearing surface (148), and a test piece (110) which is connected to traction means (104) for loading the test piece so that it bears against the or each bearing surface of the member, the or each bearing surface (148) is supported by an element (136) which is mounted so as to rotate about a first axis (B) on the support member, the test piece is connected to the traction means by means (114) for articulation around a second axis (A) which is substantially perpendicular to the first axis, and it further comprises means for adjusting and locking the element and the test piece in positions around the above-mentioned axes.

2. Test rig (100) according to claim 1, **characterised in that** the element (136) comprises a substantially cylindrical outer surface (144) which cooperates with a surface (140) which is substantially complementary to the support member (126) to guide the element in rotation about the first axis (B).

3. Test rig (100) according to either claim 1 or claim 2, **characterised in that** the means for locking the element (136) and/or the test piece (110) are of the screw type.

4. Test rig (100) according to claim 3, **characterised in that** the means for locking the element (136) comprise at least one screw which is screwed into a threaded hole (150) in the element and which passes through an aperture (152) in the support member (126), the head of the screw being intended, when the screw is tightened, to rest against the support member so as to fix the element in place, and the aperture having a substantially elongate shape so as to allow an angular displacement of the element about the first axis (B) when the screw is inserted in the hole in the element but is not tightened.

5. Test rig (100) according to any of the preceding claims, **characterised in that** the element (136) is supported by a middle portion (138) of the member (126) which is connected by at least a first arm (132) to a base (128) which is fixed to the frame (108), said first arm being inclined in such a way that it is oriented substantially perpendicularly to the bearing surface (148) defined by the element.

6. Test rig (100) according to claim 5, **characterised in that** the middle portion (138) is connected by at least a second arm (134) to a cross bar (130) which is substantially parallel to the base (128), said second arm being inclined in such a way that it is substantially parallel to the bearing surface (148) defined by the element.

7. Test rig (100) according to either claim 5 or claim 6, **characterised in that** the support member (126) comprises two elements (136) which are mounted so as to rotate on two middle portions (138) of the member, respectively, and about first axes (B) which are parallel to and at a distance from one another, said elements comprising bearing surfaces (148) which are intended to reproduce portions of two adjacent blade roots of a rotor wheel.

8. Test rig (100) according to claim 7, **characterised in that** the middle portions (138) of the member (126) are each connected to two parallel cross bars (130) by two second arms (134), respectively, the cross bars, the first and second arms (132, 134), the middle portions and the base (128) of the member being formed in one piece, and the test piece (110) passing between the cross bars in the assembled position.

9. Test rig (200) according to any of the preceding claims, **characterised in that** the support member (126) is connected to the frame (108) by an I-shaped part (158) having a flexible middle portion, and the test piece (110) is connected to one end of a vibrating blade, the other end of which is connected to the traction means (104) by another I-shaped part (164) having a flexible middle portion, such that the test piece and the support member are supported in a region located in the region of a vibration knot (172) of a first vibration mode (170) during a high-cycle fatigue test.
